# EUROPEAN PATENT SPECIFICATION

(11) **EP 3 018 009 B1**
(45) Date of publication and mention of the grant of the patent: **31.01.2018**
(21) Application number: 15180864.9
(22) Date of filing: 13.08.2015
(51) Int. Cl.: B60R 19/32

(54) **IMPACT ABSORPTION DEVICE FOR VEHICLES**
STOSSDÄMPFUNGSVORRICHTUNG FÜR FAHRZEUGE
DISPOSITIF D'ABSORPTION D'IMPACT POUR VÉHICULES

(30) Priority: 04.11.2014 ES 201431430 U
(43) Date of publication of application: 11.05.2016
(73) Proprietor: Gutierrez Fernandez, Isabel Aurora, 33418 Santiago de Ambiedes-Gozon (Asturias) (ES); Bernardo Gutierrez, Rafael, 33418 Santiago de Ambiedes-Gozon (Asturias) (ES)
(72) Inventor: BERNARDO GUTIERREZ, Rafael, 33418 SANTIAGO DE AMBIEDES (Asturias) (ES)
(74) Representative: Ungria López, Javier

(56) References cited:
- FR-A- 1 219 785
- US-A- 3 295 880
- US-A- 3 797 874

## Description

### OBJECT OF THE INVENTION

The present invention, as described in the title of this description, refers to an impact absorption device for vehicles installed at the front and/or the back of a vehicle to absorb frontal impacts in order to prevent or minimise the injuries suffered by the people inside the car when a frontal collision takes place.

The absorption module is framed within the area of passive safety of the people inside a car.

### BACKGROUND OF THE INVENTION

Nowadays, vehicles feature systems and devices to absorb frontal impacts, most notably those featuring shock absorbers attached to parts of the chassis of the vehicle, where the shock absorbers absorb the energy of the frontal impact. Said systems and devices are designed to prevent or at least minimise the injuries suffered by the people inside the vehicle. FR1219785 discloses an impact absorption device according to the preamble of claim 1.

### DESCRIPTION OF THE INVENTION

In order to reach the goals and to address the issues mentioned in the paragraphs above, the invention provides an impact absorption device for vehicles which comprises shock absorbers attached to parts of the chassis of the vehicle, where the shock absorbers absorb the energy generated during a frontal impact against the front and/or back of the vehicle.

The impact absorption device comprises a pair of shock absorbing modules arranged in parallel, each of them comprised by two tubular bodies: a first and a second body fitted one inside the other and guided with telescopic guides, combined with a shock absorber located inside the inner body of the tubular bodies.

One of the ends of each shock absorber is fitted by means of a first articulated connection to a support welded to a first base joined to the first tubular body, while the opposite end of the shock absorber is fitted by means of a second articulated connection to a pair of lugs welded to a second base joined to the second tubular body.

The first tubular body is a component of the chassis of the vehicle, while the second tubular body is guided inside the first tubular body, where the second tubular body is able to move relative to the first tubular body during the frontal impact.

The second cross bases of the two second tubular bodies of the shock absorbing modules are joined to a cross plate hidden behind one of the bumpers of the vehicle.

Each of the shock absorbers is placed centred running along the length of the tubular bodies comprising each shock absorbing module.

The support welded to the first base of the first tubular body is an elongated component with an end attached to said base and an opposite end connected to the shock absorber by means of the first articulated connection.

Hereinafter, in order to give a better understanding of the description, the object of the invention has been detailed in a series of drawings that are an integral part of the report and are for illustration purposes and without limitation.

### BRIEF DESCRIPTION OF THE DRAWINGS

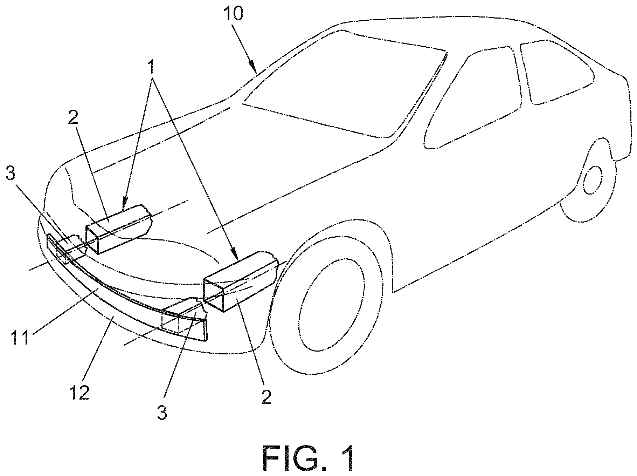

Figure 1.- It shows a perspective view of the front of a vehicle featuring an impact absorption device for vehicles which is the object of the invention.

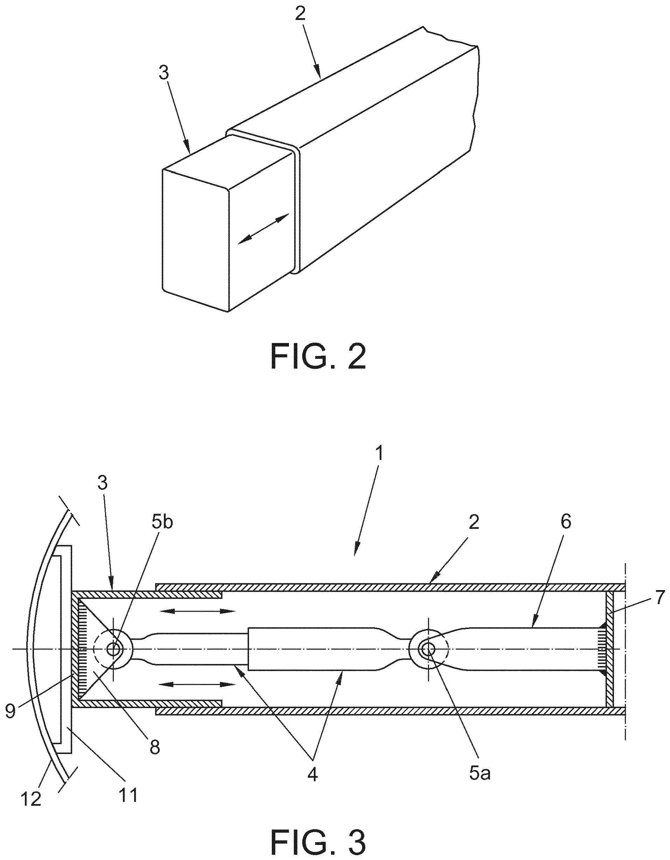

Figure 2.- It shows a perspective view of one of the parts of the device which is the object of the invention.
Figure 3.- It shows a cross-section elevation view of what has been represented in the previous figure.

### DESCRIPTION OF AN EXAMPLE OF AN EMBODIMENT

Considering the numbering adopted for the figures, the impact absorption device for vehicles comprises two shock absorbing modules (1) arranged parallel to each other, each of which is comprised by two tubular bodies: a first (2) and a second (3) body fitted one inside the other and guided with telescopic guides, combined with a shock absorber (4) located inside the inner body of the tubular bodies (2), (3).

One of the ends of each shock absorber (4) is fitted by means of a first articulated connection (5a) to a support (6) welded to a first base (7) joined to the first tubular body (2), while the opposite end of the shock absorber (4) is fitted by means of a second articulated connection (5b) to a pair of lugs (8) welded to a second base (9) joined to the second tubular body (3), which is inserted and guided inside the first tubular body (2).

Therefore, each pair of tubular bodies comprises the first tubular body (2), which is the larger one and is a component of the chassis of a vehicle (10), and the second tubular body (3), which is the smaller one and is guided inside the first tubular body (2), where the second tubular body (3) is able to move relative to the first tubular body (1) during the frontal impact.

The support (6) welded to the first base (7) of the first tubular body (2) is an elongated component with an end attached to said base (7) and the opposite end connected to the shock absorber (4) by means of the first articulated connection (5a), where said support (6) is arranged parallel to the direction of the first tubular body (2).

The second cross bases (9) of the two second tubular bodies (3) of the shock absorbing modules (1) are joined to a cross plate (11) hidden behind one of the bumpers (12) of the vehicle (10), so that when it receives a frontal impact, the two second tubular bodies (3) move lineally along the guides inside the first tubular bodies (2) against the resistance of the shock absorbers (4), of which the articulated connections (5a), (5b) will move closer together due to the force of the impact making the shock absorbers (4) compress against the resistance of springs or other means of resistance featured in said shock absorbers (4).

Each of the shock absorbers (4) is placed centred running along the length of the tubular bodies (2), (3) comprising each shock absorbing module (1).

## Claims

1. IMPACT ABSORPTION DEVICE FOR VEHICLES, comprising shock absorbers (4) attached to parts of the chassis of a vehicle (10), wherein the shock absorbers (4) absorb the energy generated during a frontal impact against the front and/or back of the vehicle (10); wherein:
- it comprises a pair of shock absorbing modules (1) arranged in parallel, each of them comprised by two tubular bodies: a first (2) and a second (3) tubular body fitted one inside the other and guided with telescopic guides, combined with a shock absorber (4) located inside the inner body of said tubular bodies (2), (3);
- one of the ends of each shock absorber (4) is fitted by means of a first articulated connection (5a) to a support (6) being an elongated component welded to a first base (7) joined to the first tubular body (2), while the opposite end of the shock absorber (4) is fitted by means of a second articulated connection (5b) to a pair of lugs (8) welded to a second cross base (9) joined to the second tubular body (3), **characterized in that** the first tubular body (2) is a component of the chassis of the vehicle (10), while the second tubular body (3) is guided inside the first tubular body (2), where the second tubular body (3) is able to move relative to the first tubular body (1) during the frontal impact.

2. IMPACT ABSORPTION DEVICE FOR VEHICLES, according to claim 1, **characterized in that** the second cross bases (9) of the two second tubular bodies (3) of the shock absorbing modules (1) are joined to a cross plate (11) hidden behind a bumper (12) of the vehicle (10).

3. IMPACT ABSORPTION DEVICE FOR VEHICLES, as claimed in any one of the previous claims, **characterized in that** each of the shock absorbers (4) is placed centred running along the length of the tubular bodies (2), (3) comprising each shock absorbing module (1).

## Patentansprüche

1. Aufpralldämpfungsvorrichtung für Fahrzeuge, die Stoßdämpfer (4) umfasst, die an Teilen des Chassis eines Fahrzeugs (10) angebracht sind, wobei die Stoßdämpfer (4) die Energie absorbieren, die während eines Frontalaufpralls an der Vorderseite und/oder der Rückseite des Fahrzeugs (10) erzeugt wird, und wobei:
sie ein Paar Stoßdämpf-Module (1) umfasst, die parallel angeordnet sind, wobei jedes von ihnen durch zwei röhrenförmige Körper, das heißt einen ersten (2) und einen zweiten (3) röhrenförmigen Körper, gebildet wird, die ineinander gepasst sind und mit Teleskop-Führungen geführt werden, und die mit einem Stoßdämpfer (4) kombiniert sind, der sich im inneren Körper der röhrenförmigen Körper (2), (3) befindet;
eines der Enden jedes Stoßdämpfers (4) mittels einer ersten Gelenkverbindung (5a) an einem Halter (6) angebracht ist, der ein längliches Bauteil ist, das an einem ersten Sockel (7) angeschweißt ist, der mit dem ersten röhrenförmigen Körper (2) verbunden ist, während das gegenüberliegende Ende des Stoßdämpfers (4) mittels einer zweiten Gelenkverbindung (5b) an paarigen Winkeln (8) angebracht ist, die an einem zweiten Quersockel (9) angeschweißt sind, der mit dem zweiten röhrenförmigen Körper (3) verbunden ist, **dadurch gekennzeichnet, dass** der erste röhrenförmige Körper (2) ein Bauteil des Chassis des Fahrzeugs (10) ist, während der zweite röhrenförmige Körper (3) im Inneren des ersten röhrenförmigen Körpers (2) geführt wird, wobei sich der zweite röhrenförmige Körper (3) während des Frontalaufpralls relativ zu dem ersten röhrenförmigen Körper (1) bewegen kann.

2. Aufpralldämpfungsvorrichtung für Fahrzeuge nach Anspruch 1, **dadurch gekennzeichnet, dass** die zweiten Quersockel (9) der zwei zweiten röhrenförmigen Körper (3) der Stoßdämpf-Module (1) mit einer Querplatte (11) verbunden sind, die hinter einer Stoßstange (12) des Fahrzeugs (10) verborgen ist.

3. Aufpralldämpfungsvorrichtung für Fahrzeuge nach einem der vorangehenden Ansprüche, **dadurch gekennzeichnet, dass** jeder der Stoßdämpfer (4) über die Länge der röhrenförmigen Körper (2), (3) verlaufend zentriert angeordnet ist, die jedes Stoßdämpf-Modul (1) bilden.

## Revendications

1. Dispositif d'absorption d'impact pour véhicules, comprenant des amortisseurs (4) fixés à des parties du châssis d'un véhicule (10), dans lequel les amortisseurs (4) absorbent l'énergie générée pendant un impact frontal contre l'avant et/ou l'arrière du véhicule (10) ; dans lequel :
- il comprend une paire de modules d'amortissement (1) agencés en parallèle, chacun d'entre eux étant composé de deux corps tubulaires :
un premier (2) et un second (3) corps tubulaire montés l'un à l'intérieur de l'autre et guidés avec des guides télescopiques, combinés à un amortisseur (4) positionné à l'intérieur du corps interne desdits corps tubulaires (2), (3) ;
- l'une des extrémités de chaque amortisseur (4) est montée au moyen d'un premier raccordement articulé (5a) sur un support (6) qui est un composant allongé, soudé sur une première base (7) assemblée au premier corps tubulaire (2), alors que l'extrémité opposée de l'amortisseur (4) est montée au moyen d'un second raccordement articulé (5b) sur une paire de pattes (8) soudée sur une seconde base transversale (9) assemblée au second corps tubulaire (3), **caractérisé en ce que** le premier corps tubulaire (2) est un composant du châssis du véhicule (10), alors que le second corps tubulaire (3) est guidé à l'intérieur du premier corps tubulaire (2), où le second corps tubulaire (3) peut se déplacer par rapport au premier corps tubulaire (1) pendant l'impact frontal.

2. Dispositif d'absorption d'impact pour véhicules selon la revendication 1, **caractérisé en ce que** les secondes bases transversales (9) des deux seconds corps tubulaires (3) des modules d'amortissement (1) sont assemblées à une plaque transversale (11) dissimulée derrière un pare-chocs (12) du véhicule (10).

3. Dispositif d'absorption d'impact pour véhicules selon l'une quelconque des revendications précédentes, **caractérisé en ce que** chacun des amortisseurs (4) est placé, centré en s'étendant le long de la longueur des corps tubulaires (2), (3) comprenant chaque module d'amortissement (1).
